(19) Europäisches Patentamt
European Patent Office
Office européen des brevets

(11) Veröffentlichungsnummer: **0 258 730 B1**

(12) **EUROPÄISCHE PATENTSCHRIFT**

(45) Veröffentlichungstag der Patentschrift: **28.10.92**

(51) Int. Cl.$^5$: **G11B 5/84**, G11B 5/70

(21) Anmeldenummer: **87111925.1**

(22) Anmeldetag: **18.08.87**

(54) **Verfahren zur Herstellung von magnetischen Aufzeichnungsträgern.**

(30) Priorität: **30.08.86 DE 3629606**

(43) Veröffentlichungstag der Anmeldung:
**09.03.88 Patentblatt 88/10**

(45) Bekanntmachung des Hinweises auf die Patenterteilung:
**28.10.92 Patentblatt 92/44**

(84) Benannte Vertragsstaaten:
**DE FR GB IT**

(56) Entgegenhaltungen:
**EP-A- 0 017 834**

**PATENT ABSTRACTS OF JAPAN, Band 9, Nr. 30 (P-333)[1753], 8. Februar 1985**

(73) Patentinhaber: **BASF Magnetics GmbH**
**Gottlieb-Daimler-Strasse 10**
**W-6800 Mannheim(DE)**

(72) Erfinder: **Grigat, Ernst, Prof. Dr.**
**Domblick 13**
**W-5090 Leverkusen 3(DE)**
Erfinder: **Meckel, Walter, Dr.**
**Zonser Strasse 9**
**W-4040 Neuss-Uedesheim(DE)**
Erfinder: **Nippe, Burkhard, Dr.**
**Krennerweg 20**
**W-8000 München 71(DE)**

(74) Vertreter: **Münch, Volker et al**
**BASF Aktiengesellschaft Patentabteilung-C6 ZSP/A**
**W-6700 Ludwigshafen(DE)**

**EP 0 258 730 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von magnetischen Aufzeichnungsträgern durch Herstellen einer Dispersion bestehend aus feinteiligem magnetischem Pigment, einem Dispergierhilfsmittel, den üblichen Zusatzstoffen und einer Lösung oder einer Dispersion eines Polymerbindemittels, schichtförmiges Auftragen der Dispersion auf einen nicht magnetisierbaren Schichtträger, anschließendes Ausrichten des anisotropen magnetischen Materials in einem Magnetfeld und Trocknen der aufgebrachten Schicht.

In magnetischen Aufzeichnungsträgern wie Audiobändern, Videobändern, Magnetbögen und Magnetkarten verwendet man üblicherweise ferromagnetisches Eisenoxid, Kobaltferrit, ferromagnetische Chromdioxidteilchen oder feine ferromagnetische Metallteilchen. Mit der zunehmenden Bedeutung von Systemen für die Aufzeichnung hoher Dichte von Signalen kurzer Wellenlänge ist es erforderlich, daß die ferromagnetischen Pigmente magnetische Aufzeichnungseigenschaften besitzen, die für eine Aufzeichnung in hoher Dichte geeignet sind, beispielsweise eine hohe Koerzitivkraft und eine große Restflußdichte. Obwohl feine ferromagnetische Metallpigmente als am besten für diesen Zweck geeignet erscheinen, haben sie von Haus aus eine Neigung, oxidiert zu werden und ihre magnetischen Eigenschaften werden leichter geschädigt als diejenigen von magnetischen Oxidpigmenten.

Üblicherweise werden die Dispergierungsmittel bereits zu Beginn des Dispergiervorganges den übrigen Ausgangsstoffen der Magnetdispersion zum Zwecke der leichteren Verteilung des magnetischen Materials zugesetzt. Hierfür werden in erster Linie oberflächenaktive Substanzen eingesetzt, deren Molekülstrukturen einen hydrophilen und einen hydrophoben Rest aufweisen und deren wirksame Struktur anionischen, kationischen, amphoteren oder nichtionischen Charakter besitzt. Diese Dispergiermittel erfordern eine sehr sorgfältige Abstimmung der angewandten Menge auf die Gesamtrezeptur, da es unter ungünstigen äußeren Bedingungen sehr leicht vorkommen kann, daß Überschüsse dieser Substanzen, beispielsweise Lecithin, an die Oberfläche des magnetischen Aufzeichnungsträgers austreten und dort Ablagerungen und Verschmutzungen der bandführenden Geräteteile verursachen, was äußerst unerwünscht ist. Bei den meisten Dispergiermitteln ist des weiteren festzustellen, daß bei Erreichen einer gewissen Konzentration, die einer Sättigungsbelegung der aktiven Zentren der Magnetpigmentoberfläche entspricht, eine weitere Verbesserung der Dispergierbarkeit und damit der erreichbaren Verdichtung und Ausrichtbarkeit der Magnetschicht nicht festgestellt werden kann, und daß die mechanischen Eigenschaften der Magnetschicht, insbesondere das Abriebverhalten sich mit zunehmender Menge an Dispergiermittel verschlechtern.

Aus diesem Grund existieren zahlreiche Anmeldungen, die verbesserte Dispergiermittel beschreiben. Die DE-OS 31 25 567 und 32 30 874 beschreiben Borverbindungen, in der DE-OS 31 36 086 werden Polymerisate mit einer polaren funktionellen Gruppe und einem Polymerisationsgrad von nicht mehr als 100 beschrieben, während die DE-OS 33 02 911 zur Dispergierung feiner Metallpigmente den Zusatz einer Fettsäure und eines Fettsäureesters zur Magnetschicht beschreibt. In der DE-OS 31 39 297 ist eine Organometallverbindung vom Äthertyp in Form von Titanat geschützt.

Andere Publikationen beschreiben organische Phosphorverbindungen als Dispergiermittel. In der EP 0 137 926 ist eine Kombination von primären oder sekundären Phosphorsäurepolyethern mit Lecithin angemeldet, die DE-OS 34 26 366 beschreibt Umsetzungsprodukte von Polyphosphorsäure mit einem Reaktionsprodukt aus einem Oxoalkohol mit 6 - 20 C-Atomen mit Ethylenoxid und Propylenoxid.

In der DE-PS 22 50 384 sind als Dispergiermittel Alkylarylsulfonsäuren allein oder in Kombination mit Phosphorsäureestern geschützt. Der Einsatz dieser Dispergiermittel führt zu magnetischen Aufzeichnungsträgern mit vorzüglichen mechanischen und elektroakustischen Eigenschaften, jedoch besteht unter ungünstigen klimatischen Bedingungen die Gefahr, daß vagabundierendes Dispergiermittel eine Korrosion der Magnetköpfe von Rekordern bewirkt.

Der Erfindung lag daher als Aufgabe zugrunde, ein Verfahren zur Herstellung magnetischer Aufzeichnungsträger bereitzustellen, die sich durch eine günstige Verteilung der Magnetpigmente in der Magnetschicht, vor allem durch hohen Richtfaktor, hohe magnetische Remanenz und somit sehr gute Aufzeichnungseigenschaften auszeichnen, eine glatte Oberfläche der Magnetschicht haben, aber gleichzeitig sehr gutes Abriebverhalten gewährleisten und die dabei nicht die oben geschilderten Nachteile besitzen.

Erfindungsgemäß wurde die Aufgabe gelöst durch ein Verfahren zur Herstellung von magnetischen Aufzeichnungsträgern mit den Merkmalen des Patentanspruchs 3 durch Herstellen einer Dispersion bestehend aus feinteiligen magnetischen Pigmenten, einem Dispergiermittel, den üblichen Zusatzstoffen, einer Lösung oder einer Dispersion eines Bindemittels und einem Vernetzungsmittel, Auftragen der Dispersion auf einen nicht magnetisierbaren Schichtträger, anschließendes Ausrichten des magnetischen Pigments mittels eines Magnetfeldes und Trocknen der aufgebrachten Schicht, dadurch gekennzeichnet, daß als Dispergiermittel mindestens eine Verbindung eingesetzt wird, welche der allgemeinen Formel gehorcht :

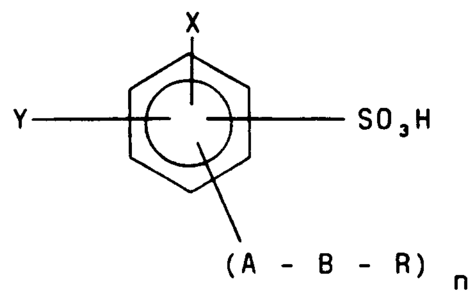

wobei

A = 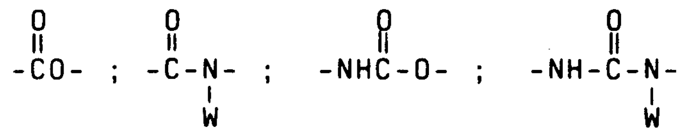

n = 1, 2
W = H; gegebenenfalls verzweigter Alkylrest mit 1 - 30 C-Atomen.
B = Linearer, gegebenenfalls verzweigter, gegebenenfalls Heteroatome enthaltender Alkenylrest, cycloaliphatischer Rest, cycloaliphatisch-aromatischer Rest,

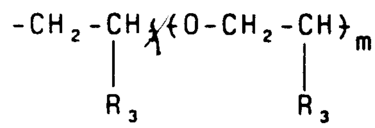

wobei
m = 1 - 20
$R_3$ = H, $CH_3$

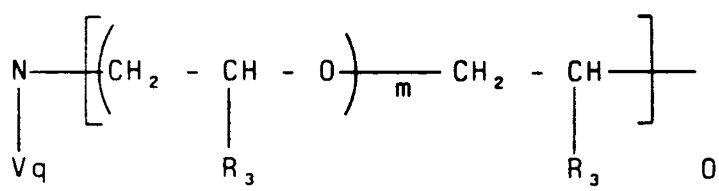

wobei
V = Alkyl mit $C_1$ - $C_{30}$
O = 1, 2, 3
q = 0, 1
O + q = 3

R = OH, 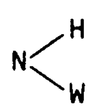

X, Y = H, Alkyl mit $C_1$ - $C_{30}$, O-Alkyl mit $C_1$ - $C_{30}$
wobei X = Y oder X ≠ Y

Erfindungswesentlich ist bei den beanspruchten Verbindungen die gleichzeitige Anwesenheit eines Sulfonsäurerestes neben zerewitinoffaktiven Gruppen R und höheren Alkylresten mit mindestens 8 C-Atomen in

einem Molekül.

Die nach dem erfindungsgemäßen Verfahren einzusetzenden Verbindungen können hergestellt werden durch ringöffnende Reaktion einer der Ausgangsverbindungen

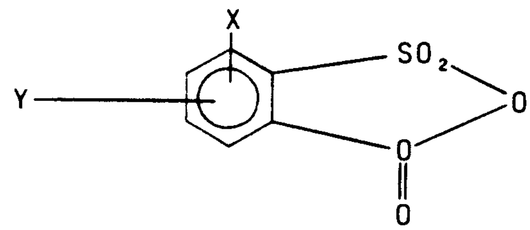

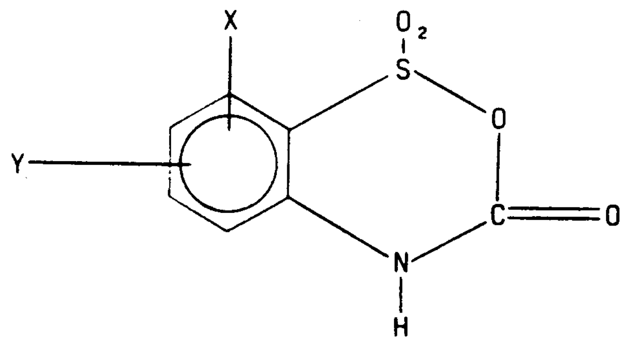

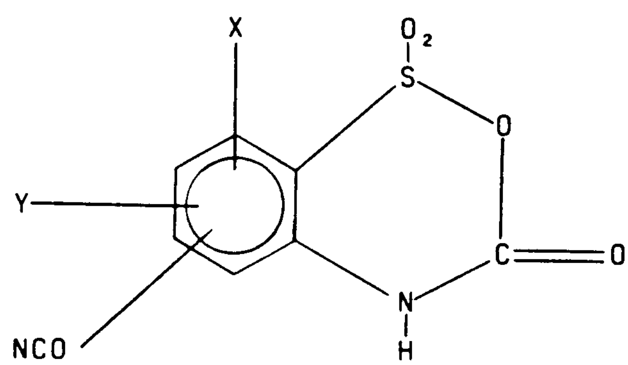

mit nukleophilen Verbindungen der Formel B - $(R)_e$

wobei e = 1, 2, 3, 4

Bevorzugte Ausgangsverbindungen sind

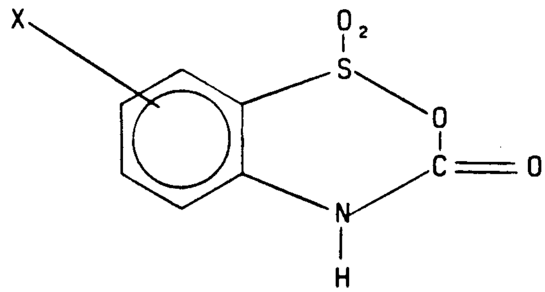

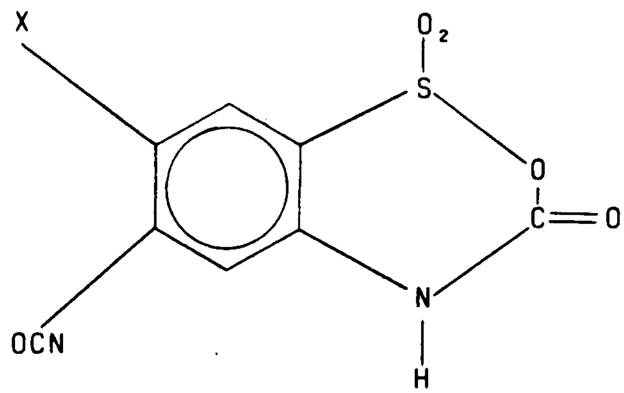

wobei X einen Methyl-, beziehungsweise Isododecylrest bedeutet, die durch Anlagerung von Chlorsulfonsäure an die entsprechenden Mono- beziehungsweise Diisocyanate nach der Lehre der US-PS 3 905 929 erhalten werden. Eine bevorzugte andere Ausgangsverbindung ist

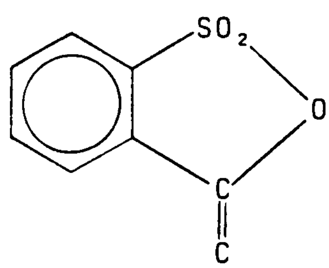

die leicht durch Wasserabspaltung aus Ortho-benzoesäure Sulfonsäure gewonnen wird. Durch Umsetzung dieser Verbindungen mit vorzugsweise bifunktionellen Verbindungen vom Typ B $(R)_e$,wie Glykolen, beispielsweise Hexandiol-1,6, Diaminen wie N,N'-Dimethylethylendiamin oder ethoxilierten Dodecyl- oder Stearylamin erhält man die gewünschten erfindungsgemäßen Dispergatoren.

Die erfinderische Idee besteht also darin, daß der Dispergator, welcher beispielsweise beim AS-3-Säure-Typ, bekannt aus der DE-PS 22 50 834, üblicherweise lediglich über seine $SO_3H$-Gruppe mit einer OH-Gruppe des magnetischen Pigments (zum Beispiel $FeO_x$) verknüpft ist, zusätzlich eine oder mehrere reaktive Gruppen, beispielsweise NH oder OH enthält, welche über die NCO-Gruppen des di- oder mehrfunktionellen Isocyanats den Dispergator mit reaktiven Gruppen des polymeren Bindemittels, beispielsweise OH- oder NH-Gruppen, verknüpft. Auf diese Weise wird der Dispergator in das Vernetzungsgerüst der magnetischen Schicht zumindest teilweise eingebaut, wodurch, wie aus den nachfolgenden Beispielen hervorgeht, bei gleichbleibenden elektroakustischen Eigenschaften die mechanischen Eigenschaften deutlich verbessert werden.

Beispiele für Dispergatoren nach den erfindungsgemäßen Verfahren sind nachfolgend genannt, ohne aber die Erfindung darauf zu beschränken.

Verbindung 1

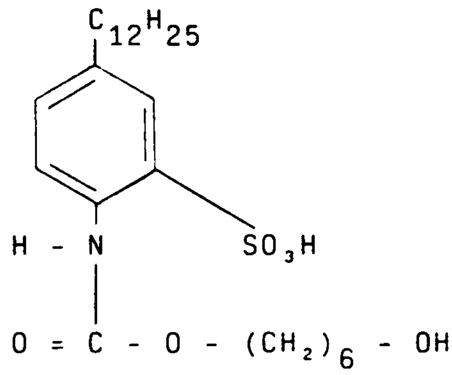

Verbindung 2

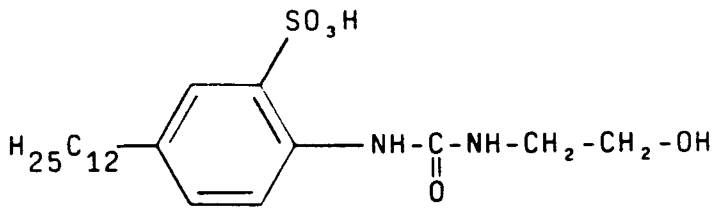

Verbindung 3

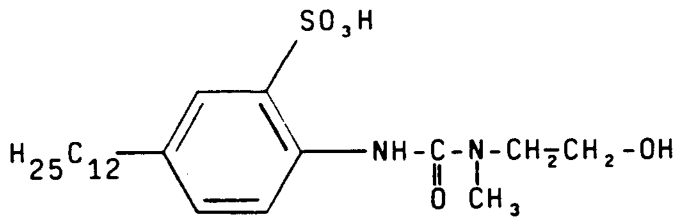

Verbindung 4

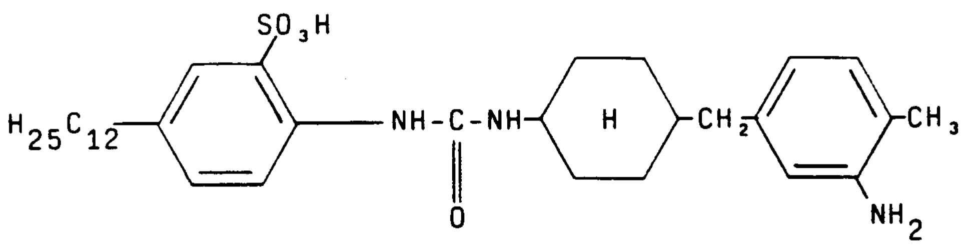

Verbindung 5

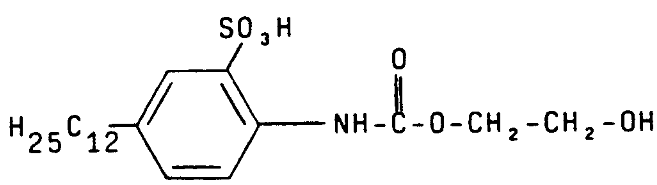

Verbindung 6

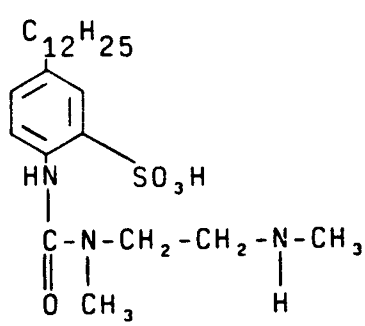

Verbindung 7

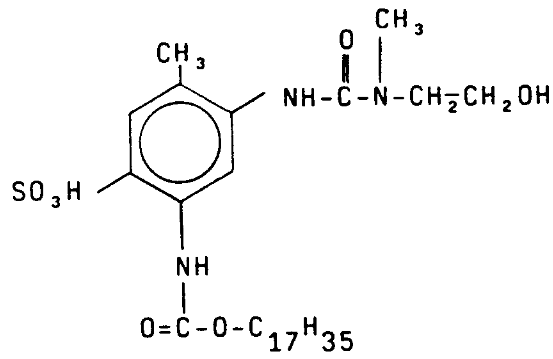

Verbindung 8

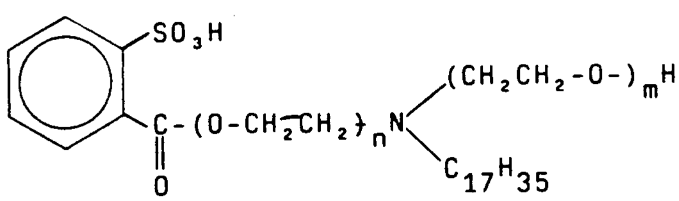

n+m = 6

Verbindung 9

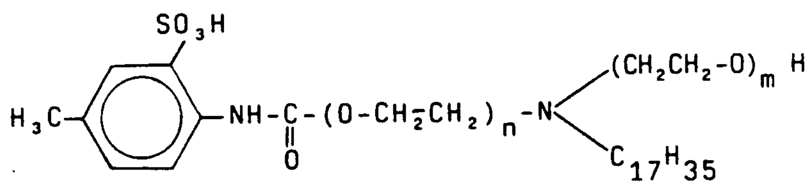

n+m = 6

Verbindung 10

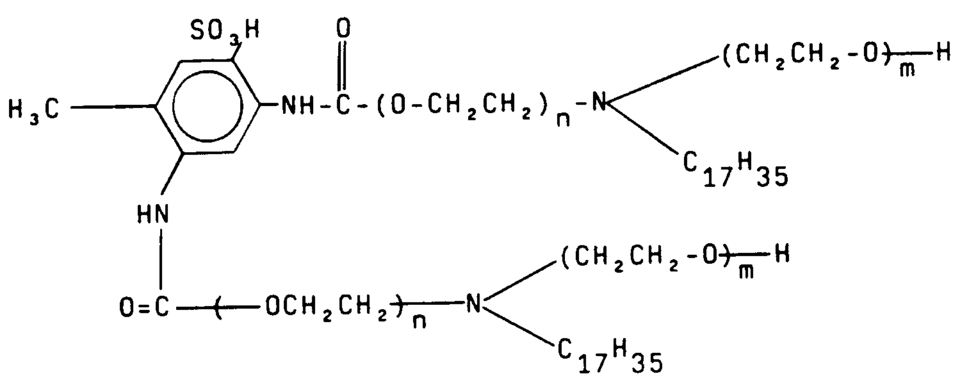

n+m = 6

Nachfolgend werden Herstellungsbeispiele für einige der nach dem erfindungsgemäßen Verfahren einsetzbaren Dispergatoren genannt.

Herstellung des Vorprodukts A

430,5 g 4-Isocyanatoisododecylbenzol werden in 1,5 l 1.2.Dichlorethan (sic.) gelöst und auf 30 °C erwärmt. Bei 30 - 40 °C wird innerhalb ca. 4 Stunden eine Lösung aus 174,8 g (1,5 Mol) Chlorsulfonsäure in 400 ml 1.2.Dichlorethan zugetropft. Nach ausgiebigem Ausblasen mit Stickstoff (17 - 20 Stunden bei ca. 40 °C) werden ca. 800 ml 1.2.Dichlorethan bei Normaldruck abdestilliert. Jetzt wird am Rotationsverdampfer auf 60 % Feststoff aufkonzentriert. Man erhält nach Abkühlen auf Raumtemperatur ein braunes, hochviskoses Produkt, welches mit Dioxan (sic.) auf 50 % Feststoff eingestellt wird. Man erhält eine dunkle, klare und niedrigviskose Lösung.

Herstellung des Vorprodukts B

Man löst 1 Mol p-Tolylisocyanat in 600 ml 1.2-Dichlorethan und leitet bei 2 - 5 °C einen durch 65%igen Oleum geführten trockenen Stickstoffstrom über die Oberfläche der gerührten Lösung. Fast augenblicklich scheidet sich ein gelblicher, pulvriger Niederschlag ab. Nach Aufnahme von 1 Mol $SO_3$ wird 2 Stunden nachgerührt, abgesaugt und der Niederschlag mehrmals in trockenem Toluol aufgeschlämmt und wieder abgesaugt. In toluolfeuchtem Zustand (Festgehalt ca. 80 %) ist das Produkt längere Zeit lagerfähig (Fp 164 - 167 °C).

Herstellung des Vorprodukts C

Man löst 1 Mol 2.4-Diisocyanatotoluol in 600 ml 1.2-Dichlorethan und leitet bei 2 - 5 °C einen durch 65%igen Oleum geführten trockenen Stickstroffstrom über die Oberfläche der gerührten Lösung. Fast augenblicklich scheidet sich ein gelblicher, pulvriger Niederschlag ab. Nach Aufnahme von 1 Mol $SO_3$ wird 2 Stunden nachgerührt, abgesaugt und der Niederschlag mehrmals in trockenem Toluol aufgeschlämmt und wieder abgesaugt. Es wird ein weißes Pulver mit einem Fp von 183 °C erhalten.

Herstellung der Verbindung 1

Zu 26,74 g Hexandiol-1.6, gelöst in 50 ml Methylenchlorid werden bei 40 - 50 °C 173,26 g einer 48%igen Lösung des Vorprodukts A in Methylenchlorid getropft. Nach 3 Stunden wird das Methylenchlorid abdestilliert. Auf ähnliche, von jedem Fachmann nachzuvollziehende Weise werden die Verbindungen 2 - 4 erhalten.

Herstellung der Verbindung 6

Zu 19,94 g N,N-Dimethylethylendiamin, gelöst in 50 ml Methylenchlorid, werden bei 40 - 50 °C 173,3 g einer 48%igen Lösung des Vorprodukts A in Methylenchlorid zugetropft. Anschließend wird das Methylenchlorid abdestilliert.

Herstellung der Verbindung 7

Zu einer Lösung von 25,4 g Vorprodukt C in 100 ml Methylenchlorid werden 10,1 g Triethylamin zugetropft, anschließend werden bei 40 °C 27 g Stearylalkohol eingerührt. Nach 10 Minuten werden 7,5 g N-Methylethanolamin eingetropft, die Mischung wird 3 Stunden lang gerührt. Nach Zugabe von 9,9 g konzentriertem HCl wird die Methylenchloridphase abgetrennt, dann wird zweimal mit je 10 ml Wasser gewaschen und anschließend wird das Methylenchlorid abgetrennt.

Herstellung der Verbindung 8

Bei 50 °C werden 87,02 g ethoxiliertes Stearylamin vorgelegt, in die 30,16 g 2-Sulfobenzoesäureanhydrid eingetragen werden.

Herstellung der Verbindung 9

74,29 g ethoxiliertes Stearylamin werden vorgelegt, zu denen bei 50 °C 28,16 g Vorprodukt B zugegeben werden.

Herrstellung der Verbindung 10

97 g ethoxiliertes Stearylamin werden bei 50 °C vorgelegt, zu denen 23,13 g Vorprodukt C zugegeben werden.

Das bei den erfindungsgemäßen Verfahren eingesetzte Dispergiermittel wird der zu dispergierenden Mischung in einer Menge von 0,5 bis 10, vorzugsweise 1,5 bis 5 Gewichtsprozent, bezogen auf die Menge der magnetischen Pigmente zugegeben. Werden zum Aufbau der Magnetschicht weitere an sich übliche Zusatzstoffe benutzt, so bleibt die vorteilhafte Wirkung des Dispergiermittels gemäß der Erfindung auch dann erhalten.

Die Zusammensetzung und Herstellung der Dispersion der magnetischen Aufzeichnungsträger entspricht den an sich üblichen Verfahren.

Das nach dem erfindungsgemäßen Verfahren eingesetzte Bindemittel ist ein übliches thermoplastisches Harz, thermisch härtendes Harz, ein reaktives Harz oder ein Gemisch aus derartigen Harzen. Beispiele für thermoplastische Harze sind Vinylchlorid/Vinylacetat-Copolymere, Vinylchlorid/Vinylidenchlorid-Copolymere, Vinylidenchlorid/Acrylnitril-Copolymere, Vinylchlorid/Acrylnitril-Copolymere, (Meth)acrylsäureester/Acrylnitril-Copolymere, (Meth)-acrylsäureester/Vinylidenchlorid-Copolymere, (Meth)-acrylsäureester/Styrol-Copolymere, Urethanelastomere, Urethanharze, Polyvinylfluorid, Butadien/Acrylnitril-Copolymere, Polyamidharze, Polyvinylacetalharze, Cellulosederivate, zum Beispiel Celluloseacetatbutyrat, Cellulosediacetat, Cellulosetriacetat, Cellulosepropionat, Celluloseacetatpropionat und Nitrocellulose, Styrol/-Butadien-Copolymere, Polyesterharze, und andere geeignete thermoplastische Harze.

Die thermisch härtenden Harze oder reaktiven Harze sind solche, deren Molekulargewicht durch Kondensations- oder Additionsreaktion beim Erhitzen oder bei der Bestrahlung mit Licht auf hohe Werte ansteigt. Beispiele sind Phenolharze, Epoxyharze, härtbare Polyurethanharze, Harnstoffharze, Melaminharze und Acrylsäureesterharze, wobei thermisch-härtende Polyurethanharze bevorzugt werden.

Die Bindemittel können einzeln oder in Kombination verwendet werden. Das Mischverhältnis der ferromagnetischen Pigmente zu dem Bindemittel beträgt etwa 8 bis 25 Gewichtsteile Bindemittel auf 100 Gewichtsteile der Magnetpigmente.

Die ferromagnetischen Pigmente umfassen ferromagnetische Eisenoxide, wie $\gamma$-$Fe_2O_3$, $Fe_3O_4$ oder $\gamma$-$Fe_2O_3$ oder $Fe_3O_4$ mit Co, Zn oder anderen Metallen in fester Lösung, oder ferromagnetische Chromdioxide, wie $CrO_2$ oder $CrO_2$ mit Metallelementen, zum Beispiel Li, Na, Sn, Pb, Fe, Co, Ni und Zn, oder Halogenatomen in fester Lösung.

Ferromagnetische Metallpigmente mit einem Oxidüberzug auf ihrer Oberfläche zur Verbesserung ihrer chemischen Stabilität können gleichfalls im Rahmen der Erfindung verwendet werden.

Um die erfindungsgemäß angestrebte höhere mechanische Dauerhaftigkeit des magnetischen Aufzeichnungsträgers zu erreichen wird wie bereits erwähnt als Vernetzungsmittel eine di- oder mehrfunktionelle Isocyanatverbindung der Dispersion zugesetzt, deren Menge jeder Fachmann durch Routineversuche ermitteln kann. Für das erfindungsgemäße Verfahren können 0,2 bis 30 Gewichtsprozent Isocyanat, bezogen auf das Bindemittel eingesetzt werden.

Mehrfunktionelle Isocyanate gehören zum Stand der Technik; infrage kommende Verbindungen sind beispielsweise in der DE-OS 20 33 782 aufgeführt. Die Herstellung von Diisocyanaten wird beispielsweise in dem Handbuch High Polymers Volume XVI - Polyurethanes, Seite 21, beschrieben.

Üblicherweise werden zur Herstellung der Dispersion organische Lösungsmittel verwendet Beispiele für brauchbare Lösungsmittel sind Ketone, wie Methylethylketon und Cyclohexanon, Alkohole, Ester, wie Ethylacetat und Butylacetat, Cellosolven, Ether, aromatische Lösungsmittel, wie Toluol, und chlorierte Kohlenwasserstoffe als Lösungsmittel, wie Tetrachlorkohlenstoff, Tetrahydrofuran und Chloroform, wobei Ketone und Ester bevorzugt werden.

Beispiele für brauchbare Gleitmittel sind Siliconöle, wie Polysiloxane, anorganische Teilchen, wie Graphit und Molybdändisulfid, Feinteilchen von Kunststoffen, beispielsweise aus Polyethylen und Polytetrafluorethylen, höhere aliphatische Säuren, höhere Alkohole, höhere aliphatische Säureester und Fluorkohlenstoffe. Hiervon werden die höheren aliphatischen Säuren und Ester derselben bevorzugt. Die Gleitmittel werden in Mengen von 0,1 bis 20 Gewichtsteilen auf 100 Gewichtsteile des Bindemittels verwendet.

Brauchbare Schleifmittel sind üblicherweise feine anorganische Teilchen, zum Beispiel geschmolzenes Aluminiumoxid, Siliciumcarbid, Chromtrioxid, Corund und Diamant mit einer durchschnittlichen Größe von 0,05 bis 0,5 $\mu$m. Die Schleifmittel werden in Mengen von 0,5 bis 20 Gewichtsteilen auf 100 Gewichtsteile des Bindemittels eingesetzt.

Beispiele für brauchbare antistatische Mittel sind elektrisch leitende Teilchen, beispielsweise solche aus Graphit, Ruß und Rußpfropfpolymeren, nicht-ionische oberflächenaktive Mittel anionische oberflächenaktive Mittel und kationische oberflächenaktive Mittel.

Beispiele für brauchbare nichtmagnetische Schichtträger sind synthetische Harze, zum Beispiel Polyester, Polyamide, Polyolefine und Cellulosederivate, nichtmagnetische Metalle, Glas, Keramik und Papier.

Der Schichtträger wird in Form eines Filmes, eines Bandes, eines Bogens, einer Karte, einer Scheibe, einer Trommel oder in anderen geeigneten Formen verwendet.

Die Herstellung der Magnetdispersion erfolgt in bekannter Weise. Hierzu werden die magnetischen Pigmente mit einem Teil der verwendeten Bindemittellösungen, ausreichender Lösungsmittelmenge sowie Dispergiermittel in einer Dispergiereinrichtung, zum Beispiel einer Topfkugelmühle oder Rührwerkskugelmühle, gegebenenfalls unter Zusatz von anderen Zusatzstoffen dispergiert. Die Dispergierung wird so lange fortgeführt, bis eine erwünschte feine Verteilung der Dispersion erreicht wird. Danach wird der Rest der Bindemittellösungen sowie übrige Zusatzstoffe zugesetzt und durch weiteres Dispergieren beziehungsweise intensives Rühren mit übriger Dispersion homogenisiert. In manchen Fällen ist es auch möglich, die gesamten Bestandteile der Dispersion in die Mühle einzufüllen und einphasig zu dispergieren. Durch anschließendes wiederholtes Filtrieren erhält man eine völlig homogene Magnetdispersion.

Die Magnetdispersion wird nun mit Hilfe üblicher Gießmaschinen, zum Beispiel mittels eines Extrudergießers, auf den nicht magnetisierbaren Schichtträger aufgetragen. Bevor die noch flüssige Dispersion auf dem Träger getrocknet wird, was zweckmäßigerweise bei Temperaturen von 50 bis 90 °C während 2 bis 5 Minuten geschieht, werden die anisotropen Magnetpigmente durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 50 bis 100 °C, vorzugsweise 60 bis 80 °C, geglättet und verdichtet werden. Die Dicke der Magnetschicht beträgt im allgemeinen 1 bis 20 µm.

Die erfindungsgemäß hergestellten magnetischen Aufzeichnungsträger zeichnen sich durch eine geringe Rauhigkeit der Oberfläche aus. Hauptsächliche Vorteile der erfindungsgemäß hergestellten Aufzeichnungsträger liegen in verbesserten mechanischen Eigenschaften der Magnetschicht, insbesondere des Abrieb- und Klebeverhaltens und damit verbesserter Lebensdauer.

Ein weiterer Unterschied besteht darin, daß bei den bisher bekannten Dispergiermitteln bei Dosierungen über die der Sättigungsbelegung der Magnetpigmentoberfläche entsprechenden Mengen hinaus sich die mechanischen Eigenschaften der Magnetschicht verschlechtern und eine Korrosionsneigung der Magnetköpfe eintreten kann, während gemäß dem erfindungsgemäßen Verfahren günstige Reibungswerte und gutes Abriebsverhalten erhalten bleiben und keine Korrosion der Magnetköpfe festzustellen ist.

Die Erfindung wird nachfolgend im einzelnen anhand der folgenden Beispiele beschrieben, die lediglich zur Erläuterung dienen, ohne die Erfindung zu beschränken.

Beispiel 1:

Eine magnetische Dispersion wurde aus 100 g nadelförmigem Co-dotiertem $Fe_3O_4$, 4 g Dispergator der Formel 2, 19 g Polyesterpolyurethan, 4 g Copolymerisat aus Polyvinylchlorid/Polyvinylacetat/Polyvinylalkohol, 0,5 g Gleitmittel, 284 g THF (Lösungsmittel) sowie 3,5 g trifunktionellem Isocyanat (Desmodur L-75 der Bayer AG) hergestellt und nach Filtration auf einen 10 µm dicken Polyethylenterephthalat-Schichtträger, wie oben beschrieben, aufgetragen und nachbehandelt, wobei die Gesamtschichtdicke 13,5 µm betrug. Das Material wurde in 3,81 mm breite Streifen geschnitten.

Zur Bestimmung der elektroakustischen Eigenschaften wurde die Koerzitivkraft $I_HC$ und als Maß für die Ausrichtung der magnetischen Pigmente wurde das Verhältnis der Magnetisierung in Längsrichtung zur Sättigungsmagnetisierung $M_R/M_S$ bestimmt. Um die mechanischen Eigenschaften zu charakterisieren, wurden das Wickelkleben und der Abrieb bestimmt. Zur Bestimmung des Wickelklebens wurde ein 100 m langer Streifen bei einem Bandzug von 150 p auf einen Aluminiumkern aufgewickelt und 3 Tage bei einem Klima von 40 °C und 90 % r.F. gelagert. Danach wurde die beim Abwickeln erforderliche Ablösekraft mittels einer Kraftmeßdose (in mp) gemessen. Der Abrieb wurde bestimmt, indem ein 80 m langer Streifen in einer handelsüblichen Compact-Cassette konfektioniert und in einem käuflichen Cassettenrecorder 54 mal in schnellem Vor- und Rücklauf reversiert wurde. Der an den geräteseitigen Teilen (Bezeichnung Kö) und am Andruckfilz der Cassette (Fi) aufgetretene Abrieb wurde qualitativ bestimmt (1 = kein Abrieb, 6 = starker Abrieb).

Beispiel 2:

Es wurde wie in Beispiel 1 verfahren, mit dem einzigen Unterschied, daß 4 g Dispergator der Formel 3 verwendet wurden.

Beispiel 3:

Es wurde wie in Beispiel 1 verfahren, jedoch wurden 4 g Dispergator der Formel 4 eingesetzt.

Vergleichsbeispiel 4:

Wieder wurde wie in Beispiel 1 verfahren, jedoch wurden 4 g des Dispergators AS-3-Säure, bekannt aus der DE-PS 22 50 834, eingesetzt.

Wie die nachfolgende Tabelle zeigt, ergeben die nach dem erfindungsgemäßen Verfahren eingesetzten Dispergatoren gegenüber einem bekannten Dispergator Aufzeichnungsträger mit wesentlich verbessertem Wickelkleben und Abriebfestigkeit, wobei die elektroakustischen Eigenschaften gleich geblieben sind.

Tabelle:

| | $I_HC$ (kA/m) | $M_R/M_S$ | Wickelkleben (mp) | Abrieb Kö | Abrieb Fi |
|---|---|---|---|---|---|
| Beispiel 1 | 51 | 0,86 | 0 | 3 | 3 |
| Beispiel 2 | 51 | 0,85 | 4 | 3 | 3 |
| Beispiel 3 | 51 | 0,85 | 0 | 4 | 3 |
| Vergleichsbeispiel 4 | 51 | 0,86 | 35 | 4-5 | 5 |

Beispiel 5:

Eine magnetische Dispersion wurde aus 100 g nadelförmigem Co-dotiertem $Fe_3O_4$, 5 g Dispergator der Formel 6, 9 g Polyesterpolyurethan, 10 g Copolymerisat aus Polyvinylchlorid/Polyvinylacetat/Polyvinylalkohol, 2,5 g Gleitmittel, 5 g Ruß, 1 g Schleifmittel, 18 g Cyclohexanon, 284 g THF sowie 3,3 g trifunktionellem Isocyanat hergestellt und nach Filtration auf einen 10 µm dicken Polyethylenterephthalat-Schichtträger, wie oben beschrieben, aufgetragen und nachbehandelt, wobei die Gesamtschichtdicke 14,2 µm betrug. Das Material wurde in 3,81 mm breite Streifen geschnitten und analogen Prüfungen wie in den Beispielen 1 - 4 unterzogen.

Beispiel 6:

Es wurde wie in Beispiel 5 verfahren, mit dem einzigen Unterschied, daß 5 g Dispergator der Formel 1 verwendet wurden.

Vergleichsbeispiel 7:

Wieder wurde wie in Beispiel 5 verfahren, jedoch wurden 5 g des Dispergators AS-3-Säure, bekannt aus der DE-PS 22 50 834, eingesetzt.

Wie die nachfolgende Tabelle zeigt, ergeben die nach dem erfindungsgemäßen Verfahren eingesetzten Dispergatoren gegenüber dem bekannten Dispergator Aufzeichnungsträger mit wesentlich verbesserter Abriebfestigkeit, wobei die elektroakustischen Eigenschaften und die Haftung auf dem Schichtträger gleich geblieben sind. Die Haftung wurde durch Aufkleben eines Tesabandes auf der magnetischen Schicht und nachfolgendes Abreißen qualitativ bestimmt (2 = gute Haftung, 3 mittlere Haftung).

Tabelle:

| | $I_HC$ (kA/m) | $M_R/M_S$ | Haftung | Abrieb Kö | Abrieb Fi |
|---|---|---|---|---|---|
| Beispiel 5 | 53 | 0,81 | 2 | 2 | 1 |
| Beispiel 6 | 53 | 0,80 | 2 | 2 | 2 |
| Vergleichsbeispiel 7 | 53 | 0,83 | 3 | 3-4 | 3 |

## Patentansprüche

1. Verfahren zur Herstellung von magnetischen Aufzeichnungsträgem durch Ansetzen einer Dispersion bestehend aus feinteiligen magnetischen Pigmenten, einem Dispergierungsmittel, den üblichen Zusatzstoffen und einer Lösung oder einer Dispersion eines Bindemittels und einem Vernetzungsmittel, Auftragen der Dispersion auf einen nicht magnetisierbaren Schichtträger, anschließendes Ausrichten des magnetischen Pigments mittels eines Magnetfeldes und Trocknen der aufgebrachten Schicht, dadurch gekennzeichnet, daß als Dispergierungsmittel mindestens eine Verbindung der allgemeinen Formel eingesetzt wird :

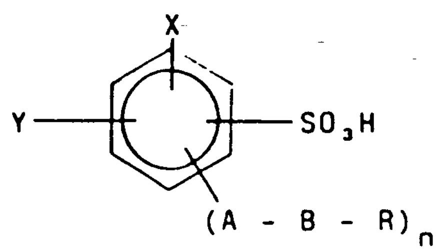

wobei

A = 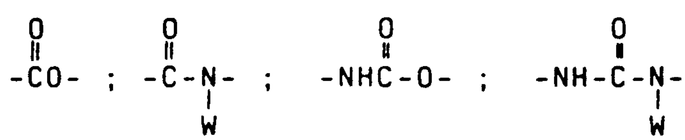

n = 1, 2
W = H; gegebenenfalls verzweigter Alkylrest mit 1 - 30 C-Atomen.
B = Linearer, gegebenenfalls verzweigter, gegebenenfalls Heteroatome enthaltender Alkenylrest, cycloaliphatischer Rest, cycloaliphatisch-aromatischer Rest,

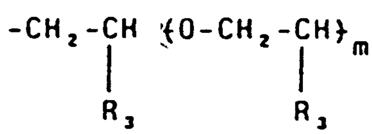

wobei
m = 1 - 20
$R_3$ = H, $CH_3$

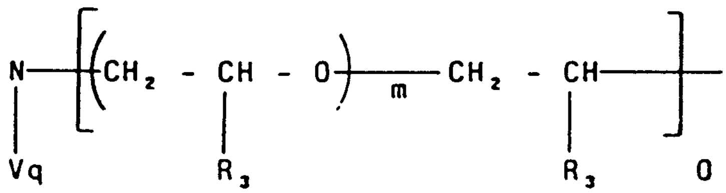

wobei
V = Alkyl mit $C_1$-$C_{30}$
O = 1, 2, 3
q = 0, 1
O + q = 3

R = OH, 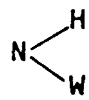

X, Y, = H, Alkyl mit $C_1$-$C_{30}$, O-Alkyl mit $C_1$-$C_{30}$
wobei X = Y oder X ≠ Y

**2.** Verfahren zur Herstellung von magnetischen Aufzeichnungsträgern nach dem Anspruch 1, dadurch gekennzeichnet, daß das Dispergierungsmittel in einer Menge von 0,5 bis 10 Gewichtsprozent bezogen auf das magnetische Pigment, und daß das di-oder mehrfunktionelle Isocyanat in einer Menge von 0,2 - 30 Gewichtsprozent, bezogen auf das Bindemittel eingesetzt werden.

**3.** Magnetischer Aufzeichnungsträger, welcher aus einem nichtmagnetischen Schichtträger und einer darauf aufgetragenen Magnetschicht, bestehend aus feinteiligen magnetischen Pigmenten, Bindermittel, Dispergierungsmittel, Vernetzungsmittel sowie weiteren an sich bekannten Zusatzstoffen, aufgebaut ist, dadurch gekennzeichnet, daß als Dispergierungsmittel mindestens eine Verbindung der nachfolgenden allgemeinen Formel enthalten ist, daß das Vernetzungsmittel ein di-oder mehrfunkionelles Isocyanat ist und daß mindestens ein Teil des polymeren Bindemittels reaktive Gruppen enthält.

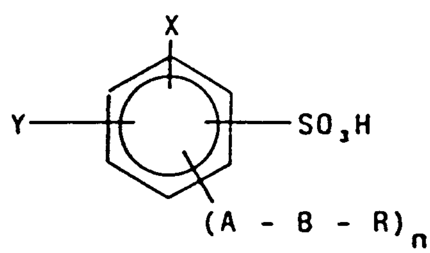

wobei

A = 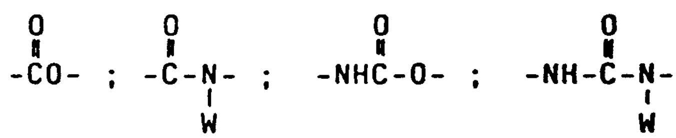

n = 1, 2
W = H; gegebenenfalls verzweigter Alkylrest mit 1 -30 G-Atomen
B = Linearer, gegebenenfalls verzweigter, gegebenenfalls Heteroatome enthaltender Alkenylrest, cycloaliphatischer Rest, cycloaliphatisch-aromatischer Rest,

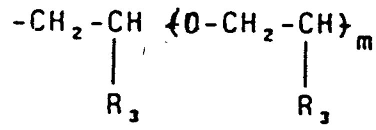

wobei
m = 1 - 20
$R_3$ = H, $CH_3$

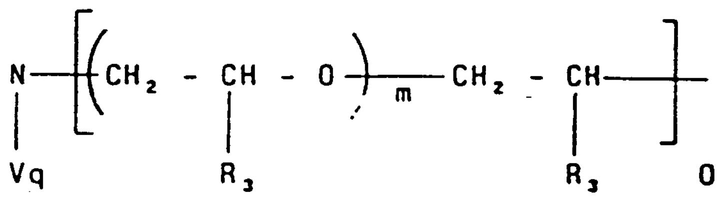

wobei
V = Alkyl mit $C_1$ - $C_{30}$
O = 1, 2, 3
q = O, 1
O + q = 3

R = OH, 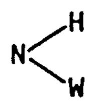

X, Y = H, Alkyl mit $C_1$-$C_{30}$, O-Alkyl mit $C_1$-$C_{30}$
wobei X = Y oder X ≠ Y

## Claims

1. A process for the production of a magnetic recording medium by preparing a dispersion consisting of finely divided magnetic pigments, a dispersant, the conventional additives and a solution or a dispersion of a binder and a crosslinking agent, applying the dispersion to a nonmagnetizable substrate, subsequently orienting the magnetic pigment by means of a magnetic field and drying the applied layer, wherein the dispersant used comprises one or more compounds of the formula

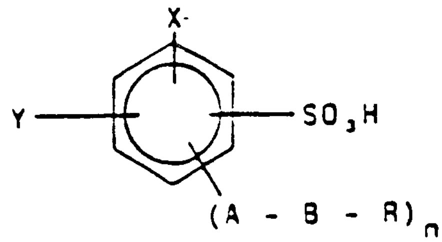

where

A = 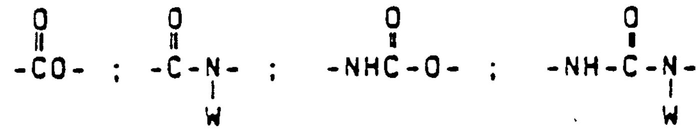

n = 1 or 2,
W = H or straight-chain or branched alkyl of 1-30 carbon atoms,
B = a linear, straight-chain or branched alkenyl radical which may contain hetero atoms, a cycloaliphatic radical or a cycloaliphatic-aromatic radical

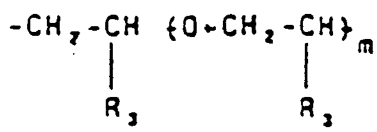

where
m = 1-20 and
$R_3$ = H or $CH_3$

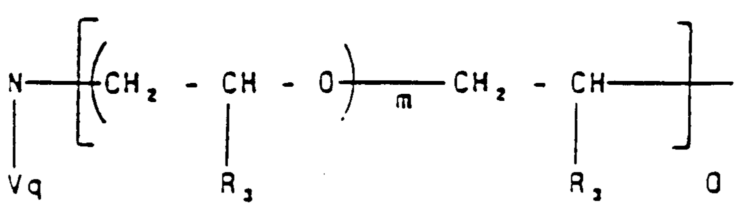

where
V = $C_1$-$C_{30}$-alkyl,
O = 1, 2 or 3,
q = 0 or 1,
O + q = 3,

R = OH or 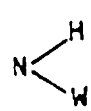

X and Y = H, $C_1$-$C_{30}$-alkyl or O-$C_1$-$C_{30}$-alkyl,
where X = Y or X ≠ Y.

**2.** A process for the production of a magnetic recording medium as claimed in claim 1, wherein the dispersant is used in an amount of from 0.5 to 10 percent by weight, based on the magnetic pigment,

and the bi- or polyfunctional isocyanate is used in an amount of 0.2-30% by weight, based on the binder.

**3.** A magnetic recording medium which is composed of a nonmagnetic substrate and a magnetic layer which is applied thereon and consists of finely divided magnetic pigments, a binder, a dispersant, a crosslinking agent and further conventional additives, wherein one or more compounds of the formula below is/are present as dispersant(s), the crosslinking agent is a bi- or polyfunctional isocyanate and at least part of the polymeric binder contains reactive groups:

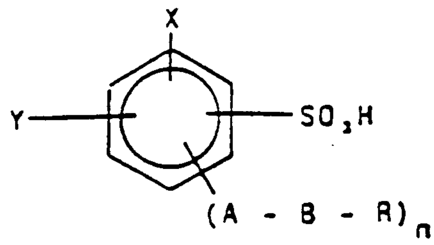

where

A = 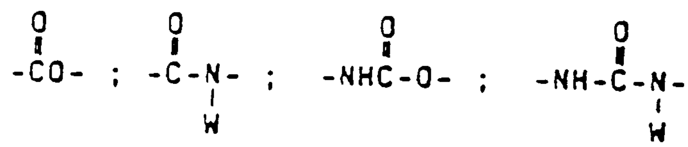

n = 1 or 2,
W = H or straight-chain or branched alkyl of 1-30 carbon atoms, B = a linear, straight-chain or branched alkenyl radical which may contain hetero atoms, a cycloaliphatic radical or a cycloaliphatic-aromatic radical

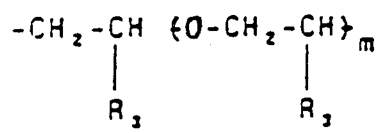

where
m = 1-20 and
$R_3$ = H or $CH_3$

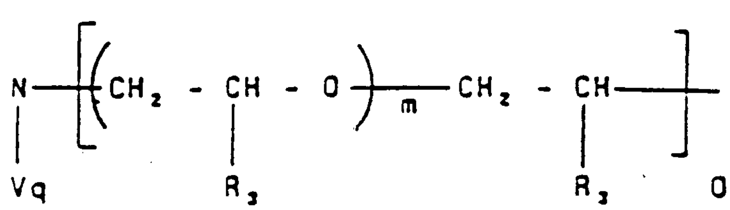

where
V = $C_1$-$C_{30}$-alkyl,
O = 1, 2 or 3,
q = 0 or 1,
O + q = 3,

R = OH or 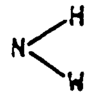

X and Y = H, $C_1$-$C_{30}$-alkyl or O-$C_1$-$C_{30}$-alkyl, where X = Y or X ≠ Y.

**Revendications**

1. Procédé de préparation de supports d'enregistrement magnétiques par préparation d'une dispersion se composant de pigments magnétiques finement divisés, d'un milieu de dispersion, des adjuvants habituels et d'une solution ou d'une dispersion d'un liant et d'un agent de réticulation, application de la dispersion sur un support non magnétisable, orientation subséquente du pigment magnéique à l'aide d'un champ magnétique et séchage de la couche déposée, caractérisé en ce qu'on utilise comme milieu de dispersion au moins un composé de formule générale

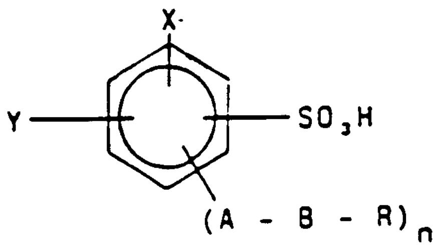

dans laquelle

A = 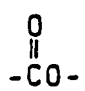 ; 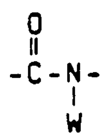 ; 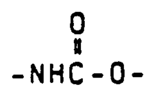 ; 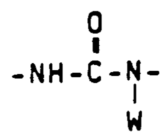

n = 1, 2
W = H; reste alkyle éventuellement ramifié avec de 1 a 30 atomes de C
B = reste alkylène linéaire, éventuellement ramifié, contenant éventuellement des hétéroatomes, reste cycloaliphatique, reste cycloaliphatique-aromatique,

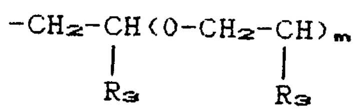

où
m = 1 - 20
$R_3$ = H, $CH_3$

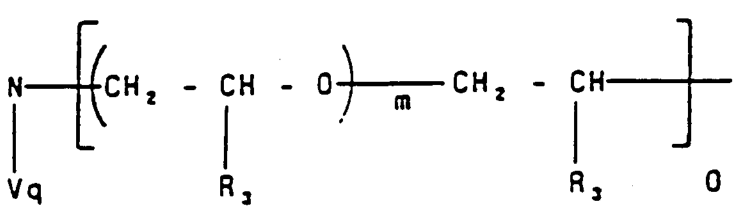

où

V = alkyle en $C_1$-$C_{30}$
O = 1, 2, 3
q = 0, 1
O + q = 3

R = OH, 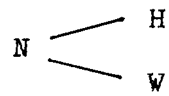

X, Y = H; alkyle en $C_1$-$C_{30}$, O-alkyle en $C_1$-$C_{30}$
avec X = Y ou X ≠ Y

2. Procédé de préparation de supports d'enregistrement magnétiques selon la revendication 1, caractérisé en ce qu'on utilise le milieu de dispersion en une quantité de 0,5 à 10% en poids par rapport au pigment magnétique et l'isocyanate di ou polyfonctionnel en une quantité de 0,2 à 30% en poids, par rapport au liant.

3. Support d'enregistrement magnétique qui est constitué d'un support non magnétique et d'une couche magnétique déposée sur ce support, se composant de pigments magnétiques finement divisés, d'un liant, d'un milieu de dispersion, d'un agent de réticulation ainsi que d'autres additifs connus en soi, caractérisé en ce qu'il contient comme milieu de dispersion au moins un composé de formule générale suivante

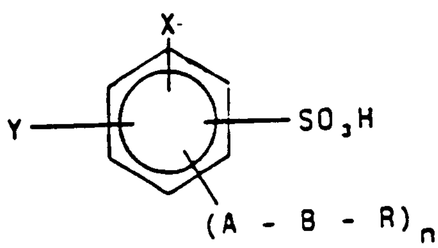

dans laquelle

A = 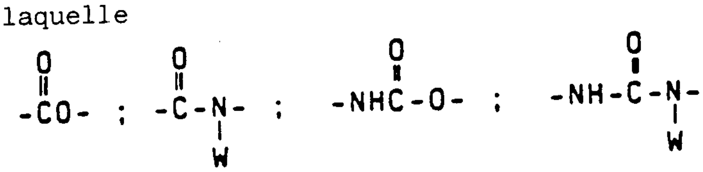

n = 1, 2
W = H; reste alkyle éventuellement ramifié avec de 1 à 30 atomes de C
B = reste alkyléne linéaire, éventuellement ramifié, contenant éventuellement des hétéroatomes, reste cycloaliphatique, reste cycloaliphatique-aromatique,

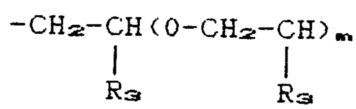

ou
m = 1 - 20
$R_3$ = H, $CH_3$

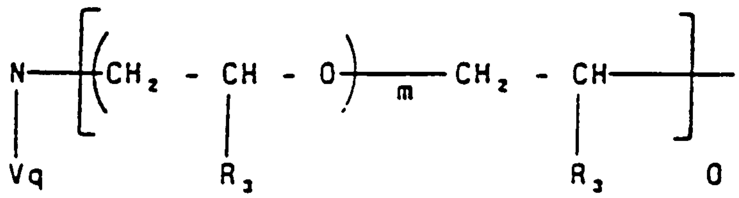

où
V = alkyle en $C_1$-$C_{30}$
O = 1, 2, 3
q = 0, 1
O + q = 3

R = OH, 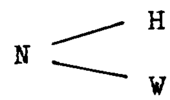

X, Y = H; alkyle en $C_1$-$C_{30}$, O-alkyle en $C_1$-$C_3$
avec X = Y ou X ≠ Y,
en ce que l'agent de réticulation est un isocyanate di ou polyfonctionnel et en ce qu au moins une partie du liant polymère contient des groupements réactifs.